# EUROPÄISCHE PATENTANMELDUNG

(11) **EP 2 065 734 A1**
(43) Veröffentlichungstag der Anmeldung: **03.06.2009**
(21) Anmeldenummer: 07023281.4
(22) Anmeldetag: 30.11.2007
(51) Int. Cl.: G02B 1/00, G02B 5/08

(54) **Spiegel zur Laserbearbeitung**

(71) Anmelder: PLANSEE SE, 6600 Reutte (AT)
(72) Erfinder: Landgraf, Janet, 6600 Wängle (AT); Knippscheer, Sven Dr., 6600 Reutte (AT)
(74) Vertreter: Kador & Partner

(57) **Zusammenfassung**

Ein Spiegel zur Laserbearbeitung besteht aus einem Substrat (2) aus einem Metall-Kohlenstoff-Verbund, das mit einer reflektierenden Schicht (1) versehen ist. Der Kohlenstoff (5) in der Metallmatrix (4) des Substrats (2) besteht vorzugsweise aus Diamant.

## Beschreibung

Die Erfindung bezieht sich auf einen Spiegel zur Laserbearbeitung sowie ein Verfahren zu dessen Herstellung.

Bei der Bearbeitung von Werkstücken mit einem Laser, z.B. Schneiden, Bohren, Schweißen, Härten, Abtragen usw. werden in dem Strahlengang des Lasers strahlformende Laserspiegel angeordnet. Zwar wird mit den bekannten Laserspiegeln rund 99 bis 99,5 % der Laserstrahlung reflektiert, die 0,5 bis 1 % der Laserstrahlung, die von dem Spiegel aufgenommen werden, führen jedoch zu einer erheblichen Aufheizung und Ausdehnung in dem Bereich des Spiegels, auf den der Laserstrahl auftrifft, wodurch eine Verformung der Spiegeloberfläche im Reflektionsbereich hervorgerufen wird, was eine Ungenauigkeit bei der Laserstrahlablenkung durch den Spiegel mit sich bringt. Eine hochpräzise Laserbearbeitung ist damit nur begrenzt möglich, insbesondere mit einem Laser hoher Leistung.

Aus diesem Grunde werden Laserspiegelmaterialien hoher Wärmeleitfähigkeit verwendet, um die Wärme von dem Reflektionsbereich an der Spiegeloberfläche rasch abzuführen. Da sie gut wärmeleitfähig und hochreflektierend sind, werden beispielsweise Spiegel aus Kupfer, Molybdän, Silber oder Aluminium eingesetzt. Allerdings besitzen diese Metalle einen hohen Wärmeausdehnungskoeffizienten, so dass weitere Maßnahmen ergriffen werden müssen, um das Problem der lokalen Verformung der Spiegeloberfläche zu lösen. Laserspiegel aus diesen Metallen werden daher entweder mit einer Wasserkühlung versehen und/oder sehr dick ausgebildet, um die Wärme ausreichend abzuführen. Eine größere Dicke ist zudem für die notwendige Steifigkeit der Metallspiegel erforderlich. Aufgrund der Wasserkühlung bzw. großen Masse können Laserspiegel als Schwingspiegel nur eingeschränkt eingesetzt werden.

Da Diamant sowohl eine hohe Wärmeleitfähigkeit wie einen geringen Wärmeausdehnungskoeffizienten besitzt, ist es ferner bekannt, Diamant für Laserspiegel zu verwenden. Damit können dünne Spiegel geringer Masse erhalten werden, die mit Gas gekühlt werden können (vgl. DE 199 55 574 B4, DE 103 39 220 B4, WO 2006/046078 A1). Da Diamant für Laserlicht transparent ist, muss das Diamantsubstrat mit einer reflektierenden Schicht beispielsweise aus Kupfer, Molybdän, Silber oder Aluminium versehen werden.

Um dem sehr unterschiedlichen Wärmeausdehnungskoeffizienten zwischen Diamant einerseits und der reflektierenden Metallschicht andererseits Rechnung zu tragen, kann die Metallschicht jedoch nur in einer sehr geringen Schichtdicke aufgebracht werden, da sie sonst abplatzt. Dies hat zur Folge, dass der Diamant praktisch auf die Endrauhigkeit der Spiegeloberfläche, die nur wenige Nanometer betragen darf, bearbeitet werden muss, was mit einem erheblichen Aufwand verbunden ist.

Aus WO 2004/080913 A1 ist bekannt, Halbleiterkomponenten auf einem Metall-Diamant-Verbund als Wärmesenke zu befestigen.

Aufgabe der Erfindung ist es, einen mit geringem Aufwand herstellbaren Laserspiegel geringer Masse und hoher Präzision bereitzustellen.

Dies wird erfindungsgemäß mit einem Spiegel nach dem Anspruch 1 erreicht. In den Ansprüchen 2-9 sind bevorzugte Ausführungsformen des erfindungsgemäßen Spiegels wiedergegeben. In Anspruch 10 ist ein bevorzugtes Verfahren zur Herstellung des erfindungsgemäßen Spiegels angegeben, welches durch die Maßnahmen der Ansprüche 11 und 12 in vorteilhafter Weise ausgebildet wird.

Der erfindungsgemäße Spiegel weist ein Substrat auf, das aus einem Metall-Kohlenstoff-Verbund gebildet wird. Der Kohlenstoff besteht vorzugsweise aus Diamantpulver, wobei als Diamant sowohl künstlicher wie natürlicher Diamant verwendet werden kann. Statt Diamant kann der Kohlenstoff jedoch auch in einer anderen Modifikation, beispielsweise als Graphit eingesetzt werden, beispielsweise in Form von Graphitfasern. Auch ist der Kohlenstoff in anderer Form einsetzbar, beispielsweise als Kohlenstoffnanofasern oder Kohlenstoffnanoröhren. Auch können Gemische dieser Kohlenstoffmodifikationen eingesetzt werden, also beispielsweise ein Gemisch aus Diamant und Graphit. Ferner ist es denkbar, zusätzlich zum Kohlenstoff, andere Materialien einzusetzen, beispielsweise Silizium oder Siliziumkarbid, also beispielsweise ein Gemisch aus Diamantpulver und Siliziumkarbidpulver.

Die Teilchengröße des Kohlenstoffs, also insbesondere des Diamanten, kann beispielsweise 5 bis 500 µm betragen, vorzugsweise liegt sie bei 100 bis 300 µm.

Die Metallphase, die normalerweise die kontinuierliche Phase oder Matrix des Verbundes bildet, in den die Kohlenstoff- bzw. Diamantteilchen eingelagert sind, kann z.B. aus Kupfer, Silber, Gold, Molybdän und/oder Aluminium oder einer Legierung dieser Metalle, also beispielsweise einer Kupferlegierung bestehen.

Um die mechanische und thermische Anbindung der Kohlenstoff- bzw. Diamantteilchen an die Metallmatrix zu verbessern, wird der Metallphase vorzugsweise wenigstens ein Element aus der Gruppe Silizium, Yttrium, Scandium, Seltenerdmetalle und Bor zugesetzt.

Der Anteil des Kohlenstoffs bzw. Diamantes in dem Verbund liegt vorzugsweise bei 40 bis 90 Vol% und damit der Anteil des Metalls bei 10-60 Vol%.

Die Größe der Spiegel und damit des Substrats hängt von der jeweiligen Laseranlage ab. So weisen typische Laserspiegel beispielsweise einen Durchmesser von 5 bis 150 mm auf. Die Dicke des Substrats kann beispielsweise 3 bis 50 mm betragen. Vorzugsweise liegt sie im unteren Bereich von 3 bis 10 mm, da der erfindungsgemäße Spiegel durch die hohe Wärmeleitfähigkeit des Metall-Kohlenstoff-Verbundes schon bei einer geringen Schichtdicke zu einer so raschen Abfuhr der Wärme aus dem Reflektionsbereich des Laserstrahlers an der Spiegeloberfläche führt, so dass bereits sehr dünne erfindungsgemäße Spiegel selbst bei Hochleistungslasern eine hochpräzise Laserbearbeitung ermöglichen.

Mit der Dicke des erfindungsgemäßen Spiegels kann zudem dessen Masse stark reduziert werden kann.

Das Substrat aus dem Metall-Kohlenstoff-Verbund des erfindungsgemäßen Laserspiegels wird mit einer das Laserlicht reflektierenden Schicht, vorzugsweise einer Metallschicht, versehen. Die reflektierende Schicht kann jedoch auch aus einem anderen Material, beispielsweise einem Halbmetall, wie Silizium, bestehen.

Die Dicke der reflektierenden Schicht muss dabei größer sein als die Rauhigkeit der Substratoberfläche. Im Gegensatz zu dem DiamantSubstrat nach dem Stand der Technik kann damit erfindungsgemäß auf eine aufwändige Oberflächenbearbeitung des Substrats verzichtet werden. Ansonsten kann die Schichtdicke der reflektierenden Schicht auf dem Substrat jedoch in weiten Grenzen schwanken. Bei einem Planspiegel kann z.B. eine Metallschicht mit einer Dicke von 100 bis 500 µm auf dem Substrat vorgesehen sein. Die auf dem Substrat vorgesehene Metallschicht wird dann einer Bearbeitung unterzogen, um die Rauhigkeit und Planheit des Spiegels auf das erforderliche Maß, also eine Rauhheit von normalerweise weniger als 5 nm und eine Planheit von normalerweise weniger als 1 µm zu bringen.

Es ist jedoch auch möglich, dass Substrat mit einer noch dickeren Metallschicht zu versehen, beispielsweise wenn auf einem planen Substrat aus der Metallschicht eine gekrümmte Spiegeloberfläche, beispielsweise für einen Parabolspiegel gebildet werden soll.

Zudem kann das Substrat selbst in verschiedenen Formen (z.B. mit gekrümmter Oberfläche) hergestellt und mit einer reflektierenden Schicht versehen werden.

Die Bearbeitung der Metallschicht auf dem Substrat zur Bildung der reflektierenden Oberfläche kann durch Diamantfräsen-, Diamantpolieren, chemische Politur und dergleichen Oberflächenbehandlungsmethoden erfolgen.

D.h. erfindungemäß wird allein die reflektierende Schicht auf dem Substrat einer Oberflächenbearbeitung unterzogen, während eine Bearbeitung der rauhen, harten Substratoberfläche nicht erforderlich ist, sodass der erfindungsgemäße Spiegel mit einem verhältnismäßig geringen Aufwand hergestellt werden kann.

Durch die Metallphase des Metall-Kohlenstoff-Verbundes des erfindungsgemäßen Spiegels wird der Wärmeausdehnungskoeffizient des Substrats dem Wärmeausdehnungskoeffizienten der reflektierenden Schicht angeglichen, insbesondere wenn die reflektierende Schicht ebenfalls aus einem Metall besteht, wodurch ein Abplatzen der reflektierenden Schicht von dem Substrat verhindert ist. Zugleich wird die Anbindung der reflektierenden Schicht an das Substrat durch die Metallphase des Substrats wesentlich erhöht, insbesondere wenn die reflektierende Schicht aus Metall besteht.

Das Substrat des erfindungsgemäßen Spiegels weist eine thermische Leitfähigkeit bei 20°C von vorzugsweise 350 bis 700 W/mK auf und einen Wärmeausdehnungskoeffizienten von vorzugsweise 3 bis 12 ppm/K. Der Wärmeausdehnungskoeffizient der reflektierenden Schicht kann deutlich größer sein und beispielsweise bis zu fünf Mal größer als der des Substrats sein. So beträgt der Wärmeausdehnungskoeffizient von Kupfer beispielsweise 17 und der von Aluminium 25 ppm/K.

Für den erfindungsgemäßen Laserspiegel wird normalerweise keine Wasserkühlung benötigt. Vielmehr reicht allein die Kühlung durch die Umgebungsluft oder gegebenenfalls durch ein Prozessgas aus, mit dem der Spiegel angeblasen werden kann. So wird beispielsweise bei der Laserbearbeitung von Metallwerksstücken als Prozessgas häufig ein Inertgas, wie Stickstoff oder Argon verwendet, das auf das Werkstück geblasen wird, um eine Oxidation des Werkstücks bei der Laserbearbeitung zu verhindern. Das Prozessgas kann also zuerst auf den Laserspiegel geblasen werden, bevor es von dort auf das Werkstück gelenkt wird.

Falls dennoch eine Wasserkühlung erforderlich sein sollte, kann das Substrat auch an der von der reflektierenden Schicht abgewandten Seite mit einer Metallschicht versehen werden. Diese Metallschicht kann verwendet werden, um eine Wasserkühlung an den Spiegel anzuschließen. Zudem kann eine dickere Metallschicht strukturiert werden (z.B. Kühlrippen, Kühlkanäle), um den Wärmeabtransport noch zu verbessern.

Die reflektierende Metallschicht und gegebenenfalls die der reflektierenden Metallschicht gegenüberliegende Schicht auf dem Substrat kann beispielsweise aus Kupfer, Silber, Gold, Molybdän und/oder Aluminium oder einer Legierung dieser Metalle bestehen.

Vorzugsweise werden Kupfer, und zwar sogenanntes Oxygen-free High Conductivity Copper (OFHC), oder Aluminium verwendet. Die reflektierende Schicht kann jedoch beispielsweise auch aus Silizium bestehen.

Die Herstellung des Metall-Kohlenstoff-Verbundes, der das Substrat des erfindungsgemäßen Spiegels bildet, kann durch schmelzmetallurgische Verfahren oder pulvermetallurgische Verfahren erfolgen.

Die schmelzmetallurgische Herstellung kann beispielsweise durch Squeeze Casting oder Gasdruckinfiltration erfolgen. Dabei wird die Kohlenstoffphase, also beispielsweise das Diamantpulver, in eine Form gegeben und dann mit dem geschmolzenen Metall infiltriert. Der Infiltrationsprozess kann dabei drucklos erfolgen oder Druck unterstützt, gegebenenfalls auch durch Unterdruck. Auch kann das flüssige Metall beispielsweise mechanisch in das Metallpulver gepresst werden. Die pulvermetallurgische Herstellung des Substrats kann beispielsweise durch Pressen / Sintern, Spark Plasma Sintern (SPS) oder durch Heißpressen erfolgen.

Auf das schmelz- oder pulvermetallurgisch hergestellte Substrat kann die reflektierende Schicht dann beispielsweise durch Löten, Diffusionsbonden, physikalische Dampfabscheidung (PVD), chemische Dampfabscheidung (CVD), durch Spritzverfahren, galvanische Verfahren, auch stromlose Beschichtung und dergleichen, aufgebracht werden. Auch kann die reflektierende Schicht z.B. durch Gießen aufgebracht werden, beispielsweise in einer Form, in der das Substrat im Abstand von der Formwand angeordnet ist, wobei in den Spalt zwischen dem Substrat und der Formwand das Metall zur Bildung der reflektierenden Schicht und gegebenenfalls der gegenüberliegenden Metallschicht gegossen wird (Hintergießen). Um ein Aufschmelzen des Verbundes zu verhindern, wird zum Hintergießen des Substrats vorzugsweise ein Metall verwendet wird, das einen niedrigeren Schmelzpunkt aufweist als die Metallphase des Verbundes, also beispielsweise Aluminium oder eine niedrig schmelzende Kupferlegierung, sodass die Metallphase beim Hintergießen nicht schmilzt.

Die so aufgebrachte reflektierende Schicht kann dann einer Nachbehandlung unterworfen werden, beispielsweise einer Homogenisierung durch eine Wärmehandlung und einem Pressen, um sie zu verdichten. Anschließend erfolgt die mechanische Endbearbeitung zur Bildung der Spiegelfläche, beispielsweise durch Diamantfräsen, Diamantpolieren, chemische Politur und dergleichen.

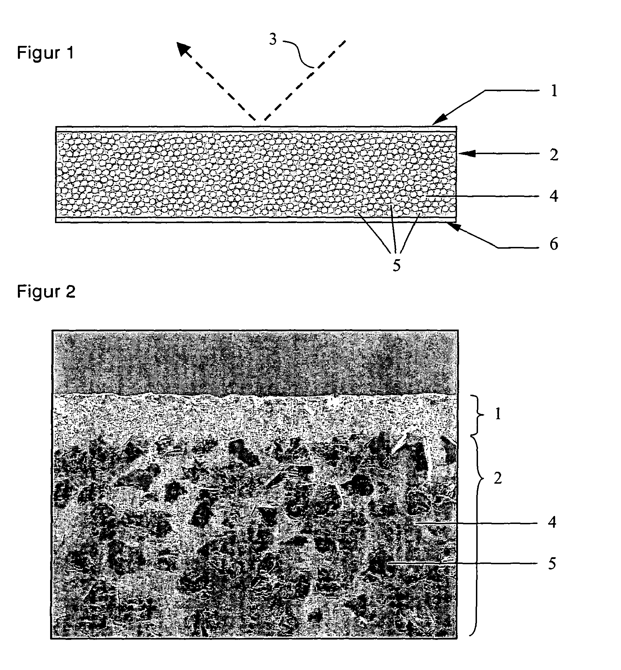

Nachstehend ist eine Ausführungsform des erfindungsgemäßen Spiegels anhand der schematischen Zeichnung in Figur 1 näher erläutert und in Figur 2 in vergrößerter Wiedergabe ein Querschnitt durch einen Laserspiegel gezeigt.

Danach besteht der Laserspiegel aus einem Substrat (2), das mit einer Schicht (1) versehen ist, an der der Laserstrahl (3) reflektiert wird. Das Substrat (2) besteht aus einem Metall-Kohlenstoff-Verbund, also einer Metallmatrix (4), in die Kohlenstoffteilchen, vorzugsweise Diamantteilchen (5), eingelagert sind. An der von der reflektierenden Schicht (1) abgewandten, also der Rückseite, kann das Substrat (2) mit einer Metallschicht (6) versehen sein.

## Patentansprüche

1. Spiegel zur Führung und/oder Formung eines Laserstrahles aus einem kohlenstoffhaltigen Substrat (2), das mit einer Schicht (1) versehen ist, die Laserlicht (3) reflektiert, **dadurch gekennzeichnet, dass** das kohlenstoffhaltige Substrat (2) durch einen Metall-Verbund mit partikelförmigen Kohlenstoffeinlagerungen (4,5) gebildet wird.

2. Spiegel nach Anspruch 1, **dadurch gekennzeichnet, dass** der Kohlenstoffanteil 40 bis 90 % des Volumens des Verbundes ausmacht.

3. Spiegel nach Anspruch 1 oder 2, **dadurch gekennzeichnet, dass** die Teilchengröße des Kohlenstoffs (5) 5 bis 300 µm beträgt.

4. Spiegel nach einem der vorstehenden Ansprüche, **dadurch gekennzeichnet, dass** der Kohlenstoff (5) zumindest teilweise Diamant ist.

5. Spiegel nach Anspruch 1, **dadurch gekennzeichnet, dass** die Metallphase (4) des Verbundes aus Kupfer, Silber, Molybdän, Gold, Aluminium oder einer Legierung dieser Metalle besteht.

6. Spiegel nach Anspruch 1 oder 5, **dadurch gekennzeichnet, dass** die Metallphase (4) wenigstens ein Element aus der Gruppe IIIb, IVb, Vb VIb, Übergangsmetalle, Silizium und Bor enthält.

7. Spiegel nach Anspruch 1, **dadurch gekennzeichnet, dass** das Substrat (2) eine Dicke von 1 bis 10 mm aufweist.

8. Spiegel nach Anspruch 1, **dadurch gekennzeichnet, dass** die reflektierende Schicht (1) eine Metall- oder Siliziumschicht ist.

9. Spiegel nach Anspruch 1, **dadurch gekennzeichnet, dass** das Substrat (2) an der von der reflektierenden Schicht (1) abgewandten Seite eine Metallschicht (6) aufweist.

10. Verfahren zur Herstellung des Spiegels nach einem der vorstehenden Ansprüche, **dadurch gekennzeichnet, dass** das Substrat (2) schmelz- oder pulvermetallurgisch hergestellt wird.

11. Verfahren nach Anspruch 10, **dadurch gekennzeichnet, dass** die reflektierende Schicht (1) und/oder die gegenüberliegende Metallschicht (6) auf das Substrat (2) aufgebracht wird.

12. Verfahren nach Anspruch 11, **dadurch gekennzeichnet, dass** die reflektierende und/oder die gegenüberliegende Metallschicht auf das Substrat (2) aufgebracht werden, ohne das Substrat (2) zuvor einer Oberflächenbearbeitung zu unterziehen.
